# EUROPEAN PATENT APPLICATION

(11) **EP 2 717 427 A1**
(43) Date of publication of application: **09.04.2014**
(21) Application number: 11866586.8
(22) Date of filing: 03.06.2011
(51) Int. Cl.: H02J 17/00, B60L 5/00, B60L 11/18, B60M 7/00, H02J 7/00

(54) **NON-CONTACT POWER RECEPTION DEVICE, VEHICLE COMPRISING SAME, NON-CONTACT POWER TRANSMISSION DEVICE, AND NON-CONTACT POWER TRANSMISSION SYSTEM**

(71) Applicant: TOYOTA JIDOSHA KABUSHIKI KAISHA, Toyota-shi, Aichi-ken, 471-8571 (JP)
(72) Inventor: ICHIKAWA, Shinji, Toyota-shi Aichi 471-8571 (JP)
(74) Representative: Winter, Brandl, Fürniss, Hübner, Röss, Kaiser, Polte - Partnerschaft
(86) International application number: PCT/JP2011/062818
(87) International publication number: WO 2012/164744

(57) **Abstract**

AC power having a power transmission frequency (f1) is transmitted from a resonant coil (140) in a power transmission device (100) to a resonant coil (210) in a power reception device (200). Moreover, communication is conducted between a communication device (170) in the power transmission device and a communication device (290) in the power reception device through wireless radio wave having a communication frequency (f2). The power transmission frequency (f1) and the communication frequency (f2) are determined in such a way that the relationship between the power transmission frequency (f1) and the communication frequency (f2) is a non-integer multiple.

## Description

### TECHNICAL FIELD

The present invention relates to a non-contact power reception device and a vehicle including the same, a non-contact power transmission device, and a non-contact power transfer system, and in particular, relates to a non-contact power reception device configured to conduct power transfer wirelessly and a vehicle including the same, a non-contact power transmission device, and a non-contact power transfer system.

### BACKGROUND ART

Japanese Patent Laying-Open No. 2002-209343 (PTD 1) discloses a system capable of transferring power in a non-contact manner from an interrogator to a transponder so as to charge a capacitor in the transponder. In the system, data communication is conducted between the transponder and the interrogator through an electromagnetic wave having a first frequency. Meanwhile, an electromagnetic wave having a second frequency lower than the first frequency is output from the interrogator to electromagnetically couple a charging antenna disposed in each of the interrogator and the transponder so as to charge the capacitor in the transponder (see PTD 1).

### CITATION LIST

### PATENT DOCUMENT

PTD 1: Japanese Patent Laying-Open No. 2002-209343
PTD 2: Japanese Patent Laying-Open No. 2010-148174
PTD 3: Japanese Patent Laying-Open No. 2010-141966

### SUMMARY OF INVENTION

### TECHNICAL PROBLEM

In the above system disclosed in Japanese Patent Laying-Open No. 2002-209343, an interference between the electromagnetic wave having the first frequency for data communication and the electromagnetic wave having the second frequency for charging leads to reduction in communication rate and/or charging efficiency. In the above system, although the second frequency is designed to be lower than the first frequency, if a harmonic component of the second frequency overlaps with the first frequency, noise occurs in the electromagnetic wave for data communication, which may lead to communication malfunction such as reduction in communication rate or the like.

Therefore, an object of the present invention to provide a non-contact power reception device capable of inhibiting an interference between power transfer and data communication and a vehicle including the same, a non-contact power transmission device, and a non-contact power transfer system.

### SOLUTION TO PROBLEM

According to the present invention, a non-contact power reception device is configured to receive in a non-contact manner power transmitted from a power transmission device, and includes a power reception unit and a communication device. The power reception unit is configured to receive in a non-contact manner AC power transmitted from the power transmission device at a first frequency. The communication device is configured to conduct wireless communication with the power transmission device through radio wave having a second frequency. The first frequency and the second frequency are determined in such a way that the relationship between the first frequency and the second frequency is a non-integer multiple.

Preferably, the power reception unit receives in a non-contact manner the AC power transmitted from a power transmission unit in the power transmission device through resonance with the power transmission unit via an electromagnetic field.

Preferably, the second frequency is determined to be higher than the first frequency.

Preferably, the first frequency is determined on the basis of a transfer status of the AC power, and the second frequency is determined in such a way that the relationship between the determined first frequency and the second frequency is a non-integer multiple.

Preferably, the second frequency is determined on the basis of a communication status with the power transmission device, and the first frequency is determined on the basis of a transfer status of the AC power in such a range that the relationship between the determined second frequency and the first frequency is a non-integer multiple.

Preferably, the non-contact power reception device further includes a modification unit configured to modify the second frequency in such a way that the relationship between the first frequency and the second frequency is a non-integer multiple.

Preferably, the non-contact power reception device further includes a modification unit configured to modify the first frequency in such a way that the relationship between the first frequency and the second frequency is a non-integer multiple.

Preferably, the communication device is capable of selecting one from a plurality of communication frequencies to conduct the wireless communication with the power transmission device, and selects a communication frequency which is a non-integer multiple of the first frequency from the plurality of communication frequencies as the second frequency to conduct the wireless communication with the power transmission device.

According to the present invention, a vehicle includes any of the non-contact power reception devices described above.

According to the present invention, a non-contact power transmission device is configured to transmit in a non-contact manner power to a power reception device, and includes a power supply unit, a power transmission unit and a communication device. The power supply unit is configured to generate AC power having a first frequency. The power transmission unit is configured to transmit in a non-contact manner the AC power generated by the power supply unit to the power reception device. The communication device is configured to conduct wireless communication with the power reception device through radio wave having a second frequency. The first frequency and the second frequency are determined in such a way that the relationship between the first frequency and the second frequency is a non-integer multiple.

Preferably, the power transmission unit transmits in a non-contact manner the AC power to a power reception unit in the power reception device through resonance with the power reception unit via an electromagnetic field.

Preferably, the second frequency is determined to be higher than the first frequency.

Preferably, the first frequency is determined on the basis of a transfer status of the AC power, and the second frequency is determined in such a way that the relationship between the determined first frequency and the second frequency is a non-integer multiple.

Preferably, the second frequency is determined on the basis of a communication status with the power reception device, and the first frequency is determined on the basis of a transfer status of the AC power in such a range that the relationship between the determined second frequency and the first frequency is a non-integer multiple.

Preferably, the non-contact power transmission device further includes a modification unit configured to modify the second frequency in such a way that the relationship between the first frequency and the second frequency is a non-integer multiple.

Preferably, the non-contact power transmission device further includes a modification unit configured to modify the first frequency in such a way that the relationship between the first frequency and the second frequency is a non-integer multiple.

Preferably, the communication device is capable of selecting one from a plurality of communication frequencies to conduct the wireless communication with the power reception device, and selects a communication frequency which is a non-integer multiple of the first frequency from the plurality of communication frequencies as the second frequency to conduct the wireless communication with the power reception device.

According to the present invention, a non-contact power transfer system is configured to transfer in a non-contact manner power from a power transmission device to a power reception device. The power transmission device includes a power supply unit, a power transmission unit and a first communication device. The power supply unit is configured to generate AC power having a first frequency. The power transmission unit is configured to transmit in a non-contact manner the AC power generated by the power supply unit to the power reception device. The first communication device is configured to conduct wireless communication with the power reception device through radio wave having a second frequency. The power reception device includes a power reception unit and a second communication device. The power reception unit is configured to receive in a non-contact manner the AC power transmitted from the power transmission unit. The second communication device is configured to conduct wireless communication with the power transmission device through radio wave having the second frequency. The first frequency and the second frequency are determined in such a way that the relationship between the first frequency and the second frequency is a non-integer multiple.

Preferably, the power transmission unit transmits in a non-contact manner the AC power to the power reception unit through resonance with the power reception unit via an electromagnetic field, and the power reception unit receives in a non-contact manner the AC power transmitted from the power transmission unit through resonance with the power transmission unit via an electromagnetic field.

Preferably, the second frequency is determined to be higher than the first frequency.

Preferably, the non-contact power transfer system further includes a control unit. The control unit adjusts the first frequency on the basis of a transfer status of the AC power, and modifies the second frequency in such a way that the relationship between the adjusted first frequency and the second frequency is a non-integer multiple.

Preferably, the non-contact power transfer system further includes a control unit. The control unit determines the second frequency on the basis of a communication status with the power transmission device, and after the determination of the second frequency, adjusts the first frequency on the basis of a transfer status of the AC power in such a range that the relationship between the first frequency and the second frequency is a non-integer multiple.

Preferably, the first and second communication devices are capable of selecting one from a plurality of communication frequencies to conduct the wireless communication with each other, and select a communication frequency which is a non-integer multiple of the first frequency from the plurality of communication frequencies as the second frequency to conduct the wireless communication with each other.

### ADVANTAGEOUS EFFECTS OF INVENTION

In the present invention, the AC power having the first frequency is transferred in a non-contact manner from the power transmission device to the power reception device. Further, the wireless communication is conducted between the power transmission device and the power reception device through radio wave having the second frequency. Furthermore, since the first frequency and the second frequency are determined in such a way that the relationship between the first frequency and the second frequency is a non-integer multiple, neither will the harmonic component of the AC power overlap with the radio wave for wireless communication nor will the harmonic component of the radio wave for wireless communication overlap with the AC power. Thereby, according to the present invention, it is possible to inhibit the interference between power transfer and data communication.

### BRIEF DESCRIPTION OF DRAWINGS

Fig. 1 is a view illustrating a general configuration of a non-contact power transfer system according to Embodiment 1 of the present invention;
Fig. 2 is a view illustrating a principle of power transfer through resonance;
Fig. 3 is a view illustrating a relationship between a frequency and a transfer efficiency of AC power transferred from a power transmission device to a vehicle;
Fig. 4 is a view conceptually explaining a way of determining a power transmission frequency and a communication frequency according to Embodiment 2;
Fig. 5 is a flowchart explaining a procedure of determining the power transmission frequency and the communication frequency according to Embodiment 2;
Fig. 6 is a view conceptually explaining a way of determining a power transmission frequency and a communication frequency according to Embodiment 3;
Fig. 7 is a flowchart explaining a procedure of determining the power transmission frequency and the communication frequency according to Embodiment 3; and
Fig. 8 is a view illustrating a relationship between a frequency and a reflected power of the AC power transferred from the power transmission device to the vehicle.

### DESCRIPTION OF EMBODIMENTS

Hereinafter, embodiments of the present invention will be described in detail with reference to the drawings. It should be noted that in the drawings the same or corresponding portions will be given the same reference numerals, and the description thereof will not be repeated.

### [Embodiment 1]

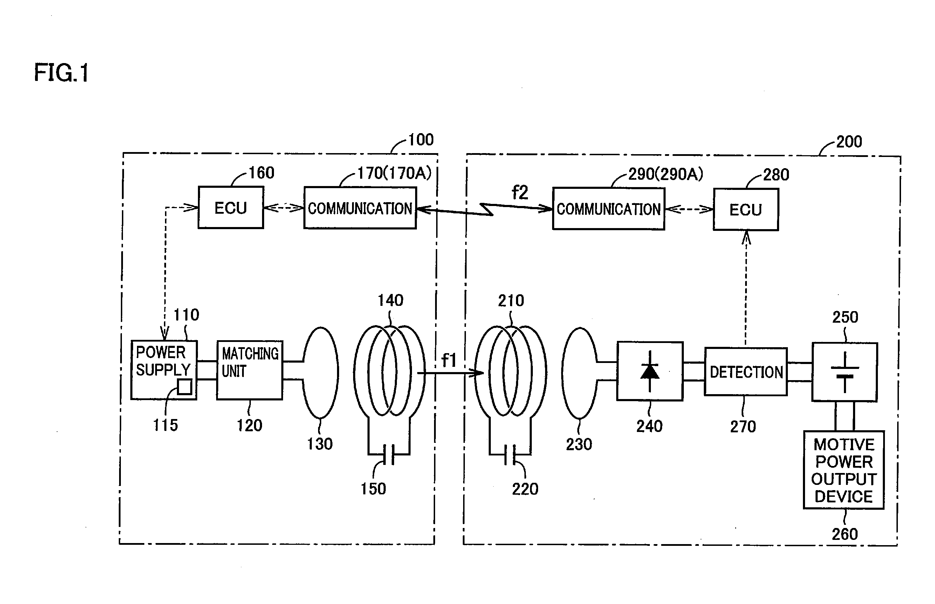

Fig. 1 is a view illustrating a general configuration of a non-contact power transfer system according to Embodiment 1 of the present invention. With reference to Fig. 1, the non-contact power transfer system includes a power transmission device 100, and a vehicle 200 serving as a power reception device.

Power transmission device 100 includes a power supply unit 110, a power sensor 115, an impedance matching unit 120, an electromagnetic induction coil 130, a resonant coil 140, a capacitor 150, an electronic control unit (hereinafter, referred to as "ECU ") 160 , and a communication device 170.

Power supply unit 110 generates AC power having a prescribed frequency f1. For example, power supply unit 110 receives power from a system power supply (not shown) and generates AC power having frequency f1. Frequency f1 is about 1 MHz to less than 20 MHz, for example. Power supply unit 110 operates in response to an instruction received from ECU 160 to generate and stop the AC power and control power output.

Power sensor 115 detects reflected power in power supply unit 110, and outputs the detected value to ECU 160. Note that reflected power is power output from power supply unit 110 which is reflected and returned to power supply unit 110. Note that power sensor 115 can be various known sensors that can detect reflected power in power supply unit 110. It is acceptable that power sensor 115 is further configured to be able to detect traveling-wave power.

Impedance matching unit 120 is provided between power supply unit 110 and electromagnetic induction coil 130, and configured to have a variable internal impedance. Impedance matching unit 120 operates in response to an instruction received from ECU 160 to vary impedance to match an input impedance of a resonance system including electromagnetic induction coil 130, resonant coil 140 and capacitor 150, and a resonant coil 210, a capacitor 220 and an electromagnetic induction coil 230 (to be described later) which are disposed in vehicle 200 with an output impedance of power supply unit 110. Impedance matching unit 120, for example, may be formed from a variable capacitor and a coil.

Electromagnetic induction coil 130 can couple with resonant coil 140 magnetically through electromagnetic induction, and supply AC power which is output from power supply unit 110 to resonant coil 140. Resonant coil 140 receives power from electromagnetic induction coil 130, and resonates via an electromagnetic field with resonant coil 210 (to be described later) mounted in vehicle 200, and thus transfers power in a non-contact manner to resonant coil 210 of vehicle 200. Note that resonant coil 140 is provided with capacitor 150. Capacitor 150 is connected for example between opposite ends of resonant coil 140.

Resonant coil 140 has its coil diameter and number of turns appropriately designed to provide a large Q factor (for example, Q > 100) and a small coupling coefficient κ on the basis of a distance to resonant coil 210 of vehicle 200, a power transmission frequency and the like. The power transfer by resonance is a power transfer technique different from electromagnetic induction which is designed to provide a small Q factor and a large coupling coefficient κ.

Note that electromagnetic induction coil 130 is provided to facilitate feeding power to resonant coil 140 from power supply unit 110, and it is acceptable to connect power supply unit 110 directly to resonant coil 140 without disposing electromagnetic induction coil 130. Furthermore, a stray capacitance of resonant coil 140 may be utilized without disposing capacitor 150.

ECU 160 controls power transmission from power transmission device 100 to vehicle 200 according to software processing through executing a previously stored program in a central processing unit (CPU, not shown) and/or hardware processing through a dedicated electronic circuit. Moreover, ECU 160 controls communication with vehicle 200 through using communication device 170 so as to exchange with vehicle 200 information required to transmit power from power transmission device 100 to vehicle 200.

Communication device 170 is a communication interface configured to conduct wireless communication with vehicle 200. Communication device 170 conducts communication with a communication device 290 (to be described later) of vehicle 200 through using radio wave having a frequency f2 (hereinafter, frequency f2 is also referred to as "communication frequency f2", and meanwhile, frequency f1 of the AC power transmitted from power transmission device 100 to vehicle 200 is also referred to as "power transmission frequency f1" or "resonant frequency f1"). Communication frequency f2, for example, is less than 10 GHz. In the present embodiment, communication frequency f2 and power transmission frequency f1 are set in such a way that the relationship between f1 and f2 is a non-integer multiple, which will be described in detail hereinafter. The information communicated to vehicle 200 through communication device 170 includes, for example, a power transmission starting instruction or a power transmission stopping instruction, a power reception efficiency or received power in vehicle 200, a voltage of the received power, and the like.

Meanwhile, vehicle 200 serving as the power reception device includes resonant coil 210, capacitor 220, electromagnetic induction coil 230, a rectifier 240, a power storage device 250, a motive power output device 260, a detector 270, an ECU 280, and a communication device 290.

Resonant coil 210 resonates with resonant coil 140 of power transmission device 100 via an electromagnetic field to receive power from resonant coil 140 in a non-contact manner. Note that resonant coil 210 is also provided with capacitor 220. Capacitor 220 is connected for example between opposite ends of resonant coil 210. Resonant coil 210 has its coil diameter, its number of turns and the like appropriately designed to provide a large Q-factor and a small coupling coefficient κ on the basis of a distance to resonant coil 140, a power transmission frequency and the like of resonant coil 140 of power transmission device 100.

Electromagnetic induction coil 230 can couple with resonant coil 210 magnetically through electromagnetic induction, and extract the power that resonant coil 210 has received through electromagnetic induction and output it to rectifier 240. Note that electromagnetic induction coil 230 is provided to facilitate extracting power from resonant coil 210, and it is acceptable that rectifier 240 is directly connected to resonant coil 210 without disposing electromagnetic induction coil 230. Furthermore, a stray capacitance of resonant coil 210 may be utilized so as not to dispose capacitor 220.

Rectifier 240 rectifies AC power extracted by electromagnetic induction coil 230 and outputs it to power storage device 250. Power storage device 250 is a rechargeable DC power supply and formed of a secondary battery such as a lithium ion or nickel hydride battery. Power storage device 250 stores power output from rectifier 240, and also stores power generated by motive power output device 260. Then, power storage device 250 supplies the stored power to motive power output device 260. Note that it is acceptable to use a capacitor of a large capacitance as power storage device 250.

Motive power output device 260 uses power stored in power storage device 250 to generate force to drive and thus cause vehicle 200 to travel. Although not shown in particular, motive power output device 260 for example includes an inverter receiving power from power storage device 250, a motor driven by the inverter, a drive wheel driven by the motor, and the like. Note that motive power output device 260 may include a power generator for charging power storage device 250, and an engine that can drive the power generator.

Detector 270 is configured to detect a state of power received from power transmission device 100. By way of example, detector 270 includes a voltage sensor and a current sensor, detects a voltage V and a current I of DC power output from rectifier 240, and outputs the detected voltage and current to ECU 280.

ECU 280 controls power reception from power transmission device 100 according to software processing through executing a previously stored program in a CPU (not shown) and/or hardware processing through a dedicated electronic circuit. Moreover, ECU 280 controls communication with power transmission device 100 through using communication device 290 so as to exchange with power transmission device 100 information required to receive power from power transmission device 100.

Communication device 290 is a communication interface configured to conduct wireless communication with power transmission device 100. Communication device 290 conducts communication with communication device 170 of power transmission device 100 through using radio wave having frequency f2. As mentioned above, communication frequency f2 and power transmission frequency f1 are set in such a way that the relationship between f1 and f2 is a non-integer multiple.

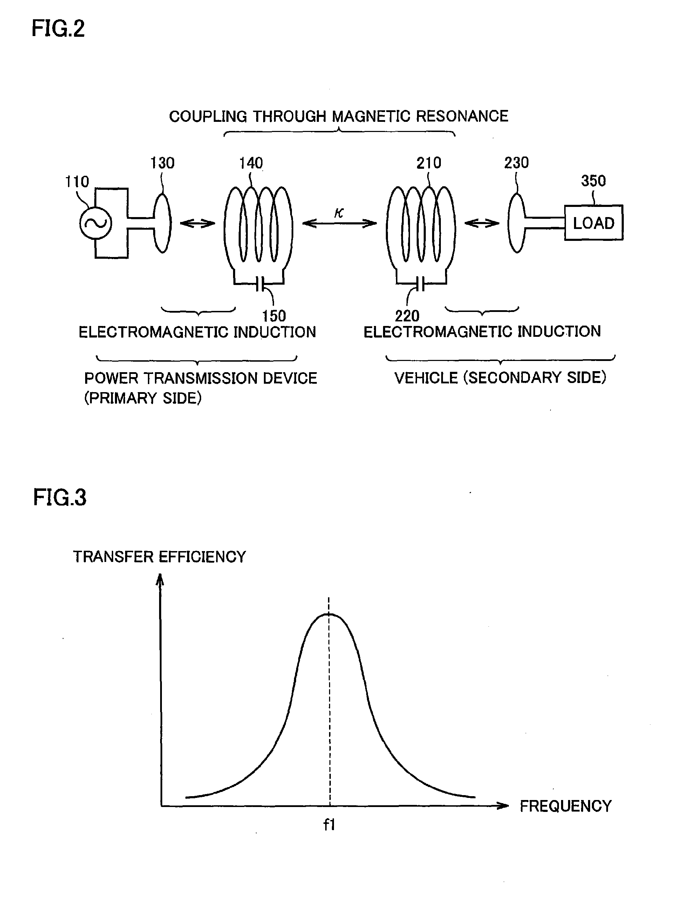

Fig. 2 is a view illustrating a principle of power transfer through resonance. With reference to Fig. 2, in the resonance, two LC resonant coils (resonant coils 140 and 210) having the same natural frequency resonate, as two tuning forks do, in an electromagnetic field (a near field) so that one coil transfers power to the other coil via the electromagnetic field.

Specifically, high-frequency power of 1 MHz to less than 20 MHz is fed to resonant coil 140 through electromagnetic induction coil 130 connected to power supply unit 110. Resonant coil 140 forms an LC resonator together with capacitor 150, and resonates via an electromagnetic field (a near field) with resonant coil 210 having the same resonant frequency as resonant coil 140. Then, energy (power) is transferred from resonant coil 140 to resonant coil 210 via the electromagnetic field. The energy (or power) transferred to resonant coil 210 is extracted by electromagnetic induction coil 230, and supplied to a load 350 following rectifier 240 (see Fig. 1).

Referring again to Fig. 1, in the non-contact power transfer system, the frequency of the AC power transferred from resonant coil 140 of power transmission device 100 to resonant coil 210 of vehicle 200, namely power transmission frequency f1, and the frequency of the radio wave for communication between communication devices 170 and 290, namely communication frequency f2 are set in such a way that the relationship between f1 and f2 is a non-integer multiple. In Embodiment 1, power transmission frequency f1 and communication frequency f2 are set in such a way that communication frequency f2 is higher than power transmission frequency f1 and communication frequency f2 is a non-integer multiple of power transmission frequency f1. Thereby, a harmonic component of the AC power transferred from resonant coil 140 to resonant coil 210 will not overlap with the radio wave for wireless communication between communication devices 170 and 290, and consequently, communication malfunction such as reduction in communication rate or the like will be inhibited.

Note that it is acceptable that power transmission frequency f1 and communication frequency f2 are set in such a way that communication frequency f2 is lower than power transmission frequency f1 and power transmission frequency f1 is a non-integer multiple of communication frequency f2. However, since the communication rate between communication devices 170 and 290 becomes higher as communication frequency f2 increases and the resonant system can be implemented at a lower cost as power transmission frequency f1 decreases, as mentioned above in Embodiment 1, power transmission frequency f1 and communication frequency f2 are set in such a way that communication frequency f2 is higher than power transmission frequency f1 and communication frequency f2 is a non-integer multiple of power transmission frequency f1. For example, it is preferable that power transmission frequency f1 and communication frequency f2 are set in such a way that communication frequency f2 is 100 times higher than power transmission frequency f1.

As mentioned above, in Embodiment 1, the AC power having power transmission frequency f1 is transferred in a non-contact manner from power transmission device 100 to vehicle 200. The wireless communication is conducted between power transmission device 100 and vehicle 200 through the radio wave having communication frequency f2. Further, since power transmission frequency f1 and communication frequency f2 are set in such a way that the relationship therebetween is a non-integer multiple, neither the harmonic component of the AC power will overlap with the radio wave for wireless communication nor the harmonic component of the radio wave for wireless communication will overlap with the AC power. Thereby, according to Embodiment 1, it is possible to inhibit the interference between the power transfer from resonant coil 140 to resonant coil 210 and the wireless communication between communication devices 170 and 290.

### [Embodiment 2]

In Embodiment 2, power transmission frequency f1, namely the frequency of the AC power transferred from resonant coil 140 of power transmission device 100 to resonant coil 210 of vehicle 200, and communication frequency f2, namely the frequency of the radio wave for wireless communication between communication devices 170 and 290 are configured to be variable in power transmission device 100 and/or vehicle 200. Power transmission frequency f1 exerts influence on a transfer efficiency of power transferred from resonant coil 140 of power transmission device 100 to resonant coil 210 of vehicle 200.

Fig. 3 is a view illustrating the relationship between the frequency and the transfer efficiency of AC power transferred from power transmission device 100 to vehicle 200. With reference to Fig. 3, the transfer efficiency reaches the maximum at a certain frequency and decreases at frequencies deviated from the certain frequency.

Thus, in Embodiment 2, power transmission frequency f1 is firstly adjusted on the basis of a transfer status (such as a power reception efficiency of vehicle 200) from power transmission device 100 to vehicle 200. Specifically, power transmission frequency f1 is firstly adjusted to maximize the power transfer efficiency. After the adjustment of power transmission frequency f1 is finished, communication frequency f2 is determined in such a way that communication frequency f2 is a non-integer multiple of power transmission frequency f1. Specifically, for example, a plurality of communication channels of mutually different frequencies are prepared in advance, and a communication channel having communication frequency f2 which is a non-integer multiple of power transmission frequency f1 is selected.

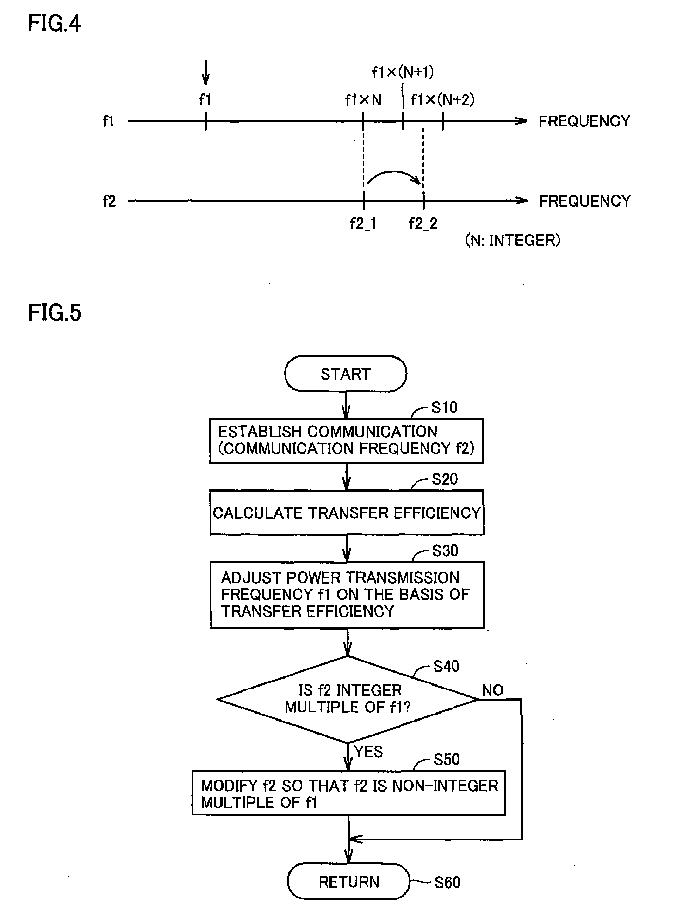

Fig. 4 is a view conceptually explaining a way of determining power transmission frequency f1 and communication frequency f2 according to Embodiment 2. With reference to Fig. 4, in Embodiment 2, power transmission frequency f1 is adjusted so as to maximize the transfer efficiency of power transmitted from power transmission device 100 to vehicle 200, and thus, power transmission frequency f1 is determined at first.

After the determination of power transmission frequency f1, whether or not communication frequency f2 is an integer multiple of power transmission frequency f1 is determined. Suppose that communication frequency f2 is f2_1 and f2_1 is an integer multiple of power transmission frequency f1, in other words, in the case where communication frequency f2 overlaps with the harmonic component of the AC power which is being transmitted, communication frequency f2 is modified to f2_2 which is a non-integer multiple of power transmission frequency f1.

The general configuration of the non-contact power transfer system according to Embodiment 2 is the same as the non-contact power transfer system according to Embodiment 1 illustrated in Fig. 1.

Fig. 5 is a flowchart explaining a procedure of determining power transmission frequency f1 and communication frequency f2 according to Embodiment 2. With reference to Fig. 5 along with Fig. 1, communication is firstly established between communication device 170 of transmission device 100 and communication device 290 of vehicle 200 (step S10). Here, communication frequency f2 is temporarily set to a predetermined initial value. Then, the power transfer from power transmission device 100 to vehicle 200 is started, and the transfer efficiency of power transmitted from power transmission device 100 to vehicle 200 is calculated (step S20). By way of example, the power reception efficiency (the ratio of the power received by vehicle 200 relative to the power transmitted from power transmission device 100) of vehicle 200 is calculated as the transfer efficiency. The calculation of the transfer efficiency may be performed in ECU 160 of power transmission device 100 or may be performed in ECU 280 of vehicle 200. In the case where the transfer efficiency is calculated in ECU 160 of power transmission device 100, the detection value of the power received is sent from vehicle 200 to power transmission device 100 by using communication devices 170 and 290. In the case where the transfer efficiency is calculated in ECU 280 of vehicle 200, the value of the power transmitted is sent from power transmission device 100 to vehicle 200 by using communication devices 170 and 290.

Thereafter, power transmission frequency f1 is adjusted on the basis of the transfer efficiency calculated in step S20 (step S30). That is, as illustrated in Fig. 3, power transmission frequency f1 is adjusted to maximize the transfer efficiency. The adjustment of power transmission frequency f1 is performed by ECU 160 through the way of controlling power supply unit 110 which is configured to be capable of modifying the frequency of AC power on the basis of an instruction from ECU 160. In addition, the adjustment of power transmission frequency f1 may be performed in ECU 280 of vehicle 200 substantially in such a way that a frequency modification instruction for power supply unit 110 is generated in ECU 280 of vehicle 200 on the basis of the transfer efficiency, and the generated instruction is transmitted to power transmission device 100 through communication devices 290 and 170.

After the adjustment of power transmission frequency f1 is finished, whether or not communication frequency f2 is an integer multiple of power transmission frequency f1 is determined (step S40). Communication frequency f2 is not necessarily to be a complete integer multiple of power transmission frequency f1, and communication frequency f2 is determined to be an integer multiple of power transmission frequency f1 in the case where an integer multiple of power transmission frequency f1 is contained in a band width offered to communication frequency f2 without causing communication malfunction. Although it has been described that power transmission frequency f1 is a frequency of the AC power generated by power supply unit 110 of power transmission device 100 and the determination process of step S40 is performed in ECU 160 of power transmission device 100, it is acceptable that the value of power transmission frequency f1 is sent to vehicle 200 and the above determination process may be performed in ECU 280 of vehicle 200.

Subsequently, if it is determined that communication frequency f2 is an integer multiple of power transmission frequency f1 in step S40 (YES in step S40), communication frequency f2 is modified in such a way that communication frequency f2 is a non-integer multiple of power transmission frequency f1 (step S50). For example, the current communication channel between communication devices 170 and 290 is switched by ECUs 160 and 280 to another communication channel having a frequency which is a non-integer multiple of power transmission frequency f1.

On the other hand, if it is determined that communication frequency f2 is a non-integer multiple of power transmission frequency f1 in step S40 (NO in step S40), the procedure proceeds to step S60 without executing the process in step S50.

As mentioned above, in Embodiment 2, power transmission frequency f1 is adjusted firstly on the basis of the transfer status of power from power transmission device 100 to vehicle 200, and after the adjustment of power transmission frequency f1 is finished, communication frequency f2 is selected in such a way that communication frequency f2 is a non-integer multiple of power transmission frequency f1. Thus, according to Embodiment 2, it is possible to inhibit the interference between the power transfer and the wireless communication between communication devices 170 and 290 while achieving a high transfer efficiency in the power transfer from resonant coil 140 to resonant coil 210.

### [Embodiment 3]

In Embodiment 2, power transmission frequency f1 is adjusted firstly on the basis of the transfer status from power transmission device 100 to vehicle 200, and thereafter, communication frequency f2 is selected in such a way that communication frequency f2 is a non-integer multiple of power transmission frequency f1.

Meanwhile, the degree of freedom of selecting communication frequency f2 may be restricted greatly by communication standards or usage conditions of radio wave. Thus, in Embodiment 3, communication frequency f2 is selected on the basis of the communication status between communication devices 170 and 290, and after communication frequency f2 is determined, power transmission frequency f1 is adjusted in such way that communication frequency f2 is a non-integer multiple of power transmission frequency f1 while considering the transfer status of power.

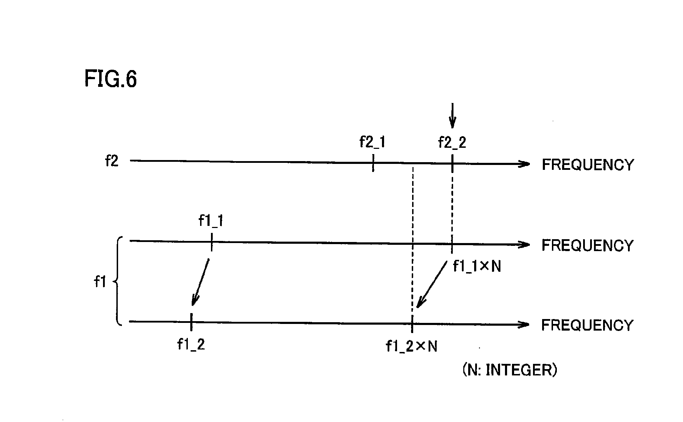

Fig. 6 is a view conceptually explaining a way of determining power transmission frequency f1 and communication frequency f2 according to Embodiment 3. With reference to Fig. 6, in Embodiment 3, communication frequency f2 is selected on the basis of the communication status between communication devices 170 and 290, and thus, communication frequency f2 is determined at first. Here, communication frequency f2 is assumed to be fixed at f2_2.

Then, power transmission frequency f1 is adjusted to maximize the transfer efficiency of the power transmitted from power transmission device 100 to vehicle 200. Here, power transmission frequency f1 is adjusted to f1_1, and in the case where communication frequency f2 (f2_2) is an integer multiple of power transmission frequency f1 (f1_1), in other words, when communication frequency f2 overlaps with the harmonic component of the AC power which is being transmitted, then, power transmission frequency f1 is modified from f1_1 to f1_2 in such a way that communication frequency f2 is a non-integer multiple of power transmission frequency f1. In addition, in order to prevent the transfer efficiency from being degraded significantly due to the modification of power transmission frequency f1, the modification amount of power transmission frequency f1 is limited to the minimum.

The general configuration of the non-contact power transfer system according to Embodiment 3 is the same as the non-contact power transfer system according to Embodiment 1 illustrated in Fig. 1.

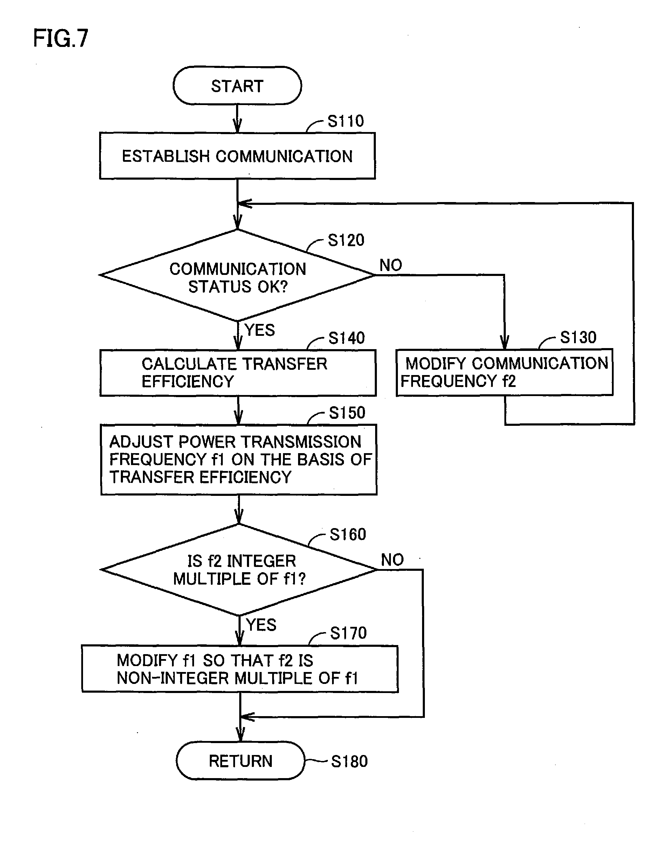

Fig. 7 is a flowchart explaining a procedure of determining power transmission frequency f1 and communication frequency f2 according to Embodiment 3. With reference to Fig. 7 along with Fig. 1, communication is firstly established between communication device 170 of transmission device 100 and communication device 290 of vehicle 200 (step S110). Then, the communication status between communication devices 170 and 290 is confirmed by ECU 160 and/or ECU 280 (step S120). For example, the quality of the communication status is confirmed according to the determination of whether or not cross talk is occurring, whether or not the communication is being conducted at a predetermined communication rate or the like.

If it is determined that the communication status is in a bad quality in step S120 (NO in step S120), communication frequency f2 is modified (step S 130). For example, the currently selected communication channel between communication devices 170 and 290 is switched by ECUs 160 and 280 to another communication channel. Thereafter, the procedure returns to step S120.

If it is determined that the communication status is in a good quality in step S120 (YES in step S120), the power transmission from power transmission device 100 to vehicle 200 is started, and the transfer efficiency of power transmitted from power transmission device 100 to vehicle 200 is calculated (step S 140). Thereafter, power transmission frequency f1 is adjusted on the basis of the calculated transfer efficiency (step S 150). After the adjustment of power transmission frequency f1 is finished, whether or not communication frequency f2 is an integer multiple of power transmission frequency f1 is determined (step S160). Since the respective process of steps S140, S150 and S160 is the same as the respective one of steps S20, S30 and S40 illustrated in Fig. 5, the descriptions thereof will not be repeated.

If it is determined that communication frequency f2 is an integer multiple of power transmission frequency f1 in step S160 (YES in step S160), power transmission frequency f1 is modified in such a way that communication frequency f2 is a non-integer multiple of power transmission frequency f1 while considering the power transfer status (step S170). Specifically, power transmission frequency f1 is modified in such a way that communication frequency f2 is a non-integer multiple of power transmission frequency f1 while limiting the modification amount of power transmission frequency f1 to the minimum so as to prevent the transfer efficiency from being degraded significantly due to the modification of power transmission frequency f1. The modification of power transmission frequency f1 is performed by ECU 160 through the way of controlling power supply unit 110. In addition, by generating the frequency modification instruction for power supply unit 110 in ECU 280 of vehicle 200 and transmitting it to power transmission device 100, the modification of power transmission frequency f1 may be performed in ECU 280 of vehicle 200 substantially.

On the other hand, if it is determined that communication frequency f2 is a non-integer multiple of power transmission frequency f1 in step S160 (NO in step S160), the procedure proceeds to step S 180 without executing the process in step S 170.

As mentioned above, in Embodiment 3, communication frequency f2 is selected on the basis of the communication status between communication devices 170 and 290, and after the determination of communication frequency f2, power transmission frequency f1 is adjusted in such a way that communication frequency f2 is a non-integer multiple of power transmission frequency f1 while considering the power transfer status. Thus, according to Embodiment 3, even in the case where the degree of freedom in selecting communication frequency f2 is limited, it is possible to inhibit the interference between the power transfer and the wireless communication between communication devices 170 and 290 while achieving a high transfer efficiency.

### [Embodiment 4]

With reference to Fig. 1 again, the non-contact power transfer system according to Embodiment 4 includes communication devices 170A and 290A in place of communication devices 170 and 290, respectively. Communication devices 170A and 290A are configured to be able to communicate with each other by selecting one communication frequency from a plurality of communication frequencies. Thus, communication devices 170A and 290A select from the plurality of communication frequencies a communication frequency which is a non-integer multiple of resonant frequency f1 as communication frequency f2 to communicate with each other.

Note that the selection of the communication frequency in communication device 170A may be performed by ECU 160 through controlling communication device 170A on the basis of resonant frequency f1. Similarly, the selection of the communication frequency in communication device 290A may be performed by ECU 280 through controlling communication device 290A on the basis of resonant frequency f1.

Similarly, according to Embodiment 4, it is possible to inhibit the interference between the power transfer from resonant coil 140 to resonant coil 210 and the wireless communication between communication devices 170A and 290A.

In Embodiment 2 and Embodiment 3 described in the above, power transmission frequency f1 is adjusted on the basis of the transfer efficiency of power transmitted from power transmission device 100 to vehicle 200. However, the parameter used to adjust power transmission frequency f1 is not limited to the transfer efficiency. For example, it is possible to adjust power transmission frequency f1 on the basis of a reflected power detected by power sensor 115 disposed in power transmission device 100.

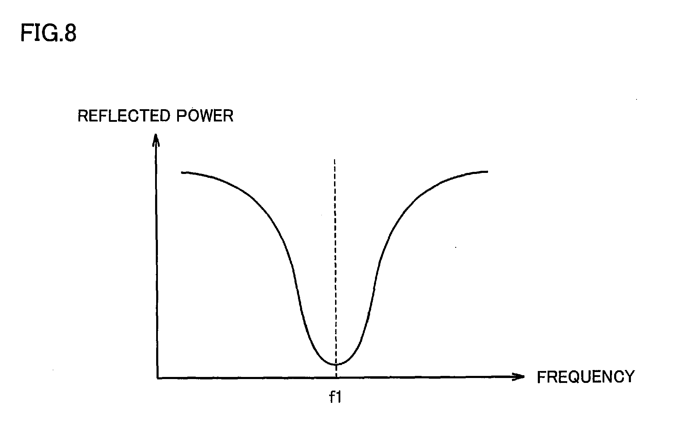

Fig. 8 is a view illustrating a relationship between a frequency and a reflected power of the AC power transferred from power transmission device 100 to vehicle 200. With reference to Fig. 8, the reflected power reaches minimized at a certain frequency and increases at frequencies deviated from the certain frequency. Thus, it is acceptable to adjust power transmission frequency f1 so that the reflected power which is detected by power sensor 115 becomes minimum.

In each embodiment mentioned in the above, the power is transferred from power transmission device 100 to vehicle 200 through using a pair of resonant coils 140 and 210; however, in place of each coil-shaped resonant coil 140 or 210, it is acceptable to use a rod-shaped or a fishbone-shaped antenna, or to use a high dielectric disk made of a high dielectric material.

In the above, impedance matching unit 120 is disposed in power transmission device 100 to adjust the impedance of the resonance system. However, it is acceptable that in place of impedance matching unit 120, a DC/DC converter is disposed posterior to rectifier 240 in vehicle 200, and the impedance of the resonance system is adjusted through controlling the DC/DC converter.

In the above, it is described that resonant coils 140 and 210 are designed so that each of resonant coils 140 and 210 has a large Q factor and a small coupling coefficient κ, and the power is transferred from resonant coil 140 to resonant coil 210 through the resonance between resonant coils 140 and 210. However, the present invention is also applicable to such a system that transfers power from a power transmission device to a vehicle through electromagnetic induction. Specifically, in the non-contact power transfer system illustrated in Fig. 1, electromagnetic induction coil 130 and resonant coil 140 are formed by one coil, resonant coil 210 and electromagnetic induction coil 230 are formed by one coil, and each coil is designed to provide a small Q factor and a large coupling coefficient κ so as to transfer power from the power transmission device to the vehicle through electromagnetic induction. However, in general, the power being transmitted through resonance has a power transmission frequency higher than the power transmission through electromagnetic induction, and thus, the difference between the communication frequency and power transmission frequency becomes smaller, which makes the interference between the communication frequency and the power transmission frequency become significant. Therefore, although the present invention is applicable to the power transmission through electromagnetic induction, it is suitable for the power transmission through resonance.

In the above, resonant coil 140 and capacitor 150 constitute one example of "power transmission unit" in the present invention, and resonant coil 210 and capacitor 220 constitute one example of "power reception unit" in the present invention.

It should be understood that the embodiments disclosed herein have been presented for the purpose of illustration and description but not limited in all aspects. It is intended that the scope of the present invention is not limited to the description above but defined by the scope of the claims and encompasses all modifications equivalent in meaning and scope to the claims.

### REFERENCE SIGNS LIST

100: power transmission device; 110: power supply unit; 115: power sensor; 120: impedance matching unit; 130, 230: electromagnetic induction coil; 140, 210: resonant coil; 150, 220: capacitor; 160, 280: ECU; 170, 170A, 290, 290A: communication device; 200: vehicle; 240: rectifier; 250: power storage device; 260: motive power output device; 350: load

## Claims

1. A non-contact power reception device configured to receive in a non-contact manner power transmitted from a power transmission device (100), comprising:
a power reception unit (210, 220) configured to receive in a non-contact manner AC power transmitted from said power transmission device at a first frequency; and
a communication device (290) configured to conduct wireless communication with said power transmission device through radio wave having a second frequency,
said first frequency and said second frequency being determined in such a way that the relationship between said first frequency and said second frequency is a non-integer multiple.

2. The non-contact power reception device according to claim 1, wherein said power reception unit receives in a non-contact manner said AC power transmitted from a power transmission unit (140, 150) in said power transmission device through resonance with said power transmission unit via an electromagnetic field.

3. The non-contact power reception device according to claim 1 or 2, wherein said second frequency is determined to be higher than said first frequency.

4. The non-contact power reception device according to claim 1 or 2, wherein said first frequency is determined on the basis of a transfer status of said AC power, and said second frequency is determined in such a way that the relationship between the determined first frequency and said second frequency is a non-integer multiple.

5. The non-contact power reception device according to claim 1 or 2, wherein said second frequency is determined on the basis of a communication status with said power transmission device, and said first frequency is determined on the basis of a transfer status of said AC power in such a range that the relationship between the determined second frequency and said first frequency is a non-integer multiple.

6. The non-contact power reception device according to claim 1 or 2, further comprising a modification unit (280) configured to modify said second frequency in such a way that the relationship between said first frequency and said second frequency is a non-integer multiple.

7. The non-contact power reception device according to claim 1 or 2, further comprising a modification unit (280) configured to modify said first frequency in such a way that the relationship between said first frequency and said second frequency is a non-integer multiple.

8. The non-contact power reception device according to claim 1 or 2, wherein said communication device (170A) is capable of selecting one from a plurality of communication frequencies to conduct the wireless communication with said power transmission device, and selects a communication frequency which is a non-integer multiple of said first frequency from said plurality of communication frequencies as said second frequency to conduct the wireless communication with said power transmission device.

9. A vehicle comprising the non-contact power reception device according to claim 1 or 2.

10. A non-contact power transmission device configured to transmit in a non-contact manner power to a power reception device (200), comprising:
a power supply unit (110) configured to generate AC power having a first frequency;
a power transmission unit (140, 150) configured to transmit in a non-contact manner said AC power generated by said power supply unit to said power reception device; and
a communication device (170) configured to conduct wireless communication with said power reception device through radio wave having a second frequency,
said first frequency and said second frequency being determined in such a way that the relationship between said first frequency and said second frequency is a non-integer multiple.

11. The non-contact power transmission device according to claim 10,
wherein said power transmission unit transmits in a non-contact manner said AC power to a power reception unit (210, 220) in said power reception device through resonance with said power reception unit via an electromagnetic field.

12. The non-contact power transmission device according to claim 10 or 11, wherein said second frequency is determined to be higher than said first frequency.

13. The non-contact power transmission device according to claim 10 or 11, wherein said first frequency is determined on the basis of a transfer status of said AC power, and said second frequency is determined in such a way that the relationship between the determined first frequency and said second frequency is a non-integer multiple.

14. The non-contact power transmission device according to claim 10 or 11, wherein said second frequency is determined on the basis of a communication status with said power reception device, and said first frequency is determined on the basis of a transfer status of said AC power in such a range that the relationship between the determined second frequency and said first frequency is a non-integer multiple.

15. The non-contact power transmission device according to claim 10 or 11, further comprising a modification unit (160) configured to modify said second frequency in such a way that the relationship between said first frequency and said second frequency is a non-integer multiple.

16. The non-contact power transmission device according to claim 10 or 11, further comprising a modification unit (160) configured to modify said first frequency in such a way that the relationship between said first frequency and said second frequency is a non-integer multiple.

17. The non-contact power transmission device according to claim 10 or 11, wherein said communication device (290A) is capable of selecting one from a plurality of communication frequencies to conduct the wireless communication with said power reception device, and selects a communication frequency which is a non-integer multiple of said first frequency from said plurality of communication frequencies as said second frequency to conduct the wireless communication with said power reception device.

18. A non-contact power transfer system configured to transfer in a non-contact manner power from a power transmission device (100) to a power reception device (200),
said power transmission device including:
a power supply unit (110) configured to generate AC power having a first frequency;
a power transmission unit (140, 150) configured to transmit in a non-contact manner said AC power generated by said power supply unit to said power reception device; and
a first communication device (170) configured to conduct wireless communication with said power reception device through radio wave having a second frequency,
said power reception device including:
a power reception unit (210, 220) configured to receive in a non-contact manner said AC power transmitted from said power transmission unit; and
a second communication device (290) configured to conduct wireless communication with said power transmission device through radio wave having said second frequency,
said first frequency and said second frequency being determined in such a way that the relationship between said first frequency and said second frequency is a non-integer multiple.

19. The non-contact power transfer system according to claim 18, wherein said power transmission unit transmits in a non-contact manner said AC power to said power reception unit through resonance with said power reception unit via an electromagnetic field, and
said power reception unit receives in a non-contact manner said AC power transmitted from said power transmission unit through resonance with said power transmission unit via an electromagnetic field.

20. The non-contact power transfer system according to claim 18 or 19,
wherein said second frequency is determined to be higher than said first frequency.

21. The non-contact power transfer system according to claim 18 or 19, further comprising a control unit (160; 280) configured to adjust said first frequency on the basis of a transfer status of said AC power and modify said second frequency in such a way that the relationship between the adjusted first frequency and said second frequency is a non-integer multiple.

22. The non-contact power transfer system according to claim 18 or 19, further comprising a control unit (160; 280) configured to determine said second frequency on the basis of a communication status with said power transmission device, and after the determination of said second frequency, adjust said first frequency on the basis of a transfer status of said AC power in such a range that the relationship between said first frequency and said second frequency is a non-integer multiple.

23. The non-contact power transfer system according to claim 18 or 19,
wherein said first and second communication devices (170A, 290A) are capable of selecting one from a plurality of communication frequencies to conduct the wireless communication with each other, and select a communication frequency which is a non-integer multiple of said first frequency from said plurality of communication frequencies as said second frequency to conduct the wireless communication with each other.
